# EUROPÄISCHE PATENTSCHRIFT

(11) **EP 0 518 123 B1**
(45) Veröffentlichungstag und Bekanntmachung des Hinweises auf die Patenterteilung: **08.01.1997**
(21) Anmeldenummer: 92108895.1
(22) Anmeldetag: 27.05.1992
(51) Int. Cl.: G11B 5/008, G11B 5/09

(54) **Magnetkopfanordnung für die Schrägspuraufzeichnung mit unsymmetrischem Azimut**
Magnetic head arrangement for inclined track recording with asymmetric azimuth
Dispositif pour tête magnétique pour l'enregistrement hélicoidal avec azimut asymétrique

(30) Priorität: 14.06.1991 DE 4119625
(43) Veröffentlichungstag der Anmeldung: 16.12.1992
(73) Patentinhaber: GRUNDIG E.M.V. Elektro-Mechanische Versuchsanstalt Max Grundig GmbH & Co. KG, D-90762 Fürth (DE)
(72) Erfinder: Greiner, Luitpold, Dr., Grundig E.M.V., M. Grundig, W-8510 Fürth/Bay. (DE)

(56) Entgegenhaltungen:
- DE-A- 3 147 275
- DE-A- 3 533 761
- DE-A- 3 635 536

## Beschreibung

Für die Aufzeichnung breitbandiger Signale, wie z.B. analoge oder digitale Bildsignale auf Magnetband, ist eine hohe Relativgeschwindigkeit zwischen dem Magnetband und den abtastenden Magnetköpfen nötig. Diese wird dadurch erreicht, daß die Magnetköpfe in eine rotierende Trommel montiert werden, die schräg vom vorbeitransportierten Magnetband umschlungen wird. Die Relativgeschwindigkeit der Abtastung ergibt sich dann aus der Summe der Geschwindigkeiten der Transportgeschwindigkeit des Magnetbandes und der Rotationsgeschwindigkeit der Magnetköpfe. Durch die schräge Umschlingung der Trommel zeichnen die Magnetköpfe, deren Spalte in etwa mit der zylindrischen Außenfläche der Trommel abschließen, die Signale in schrägen Spuren auf das Magnetband.

Bei üblichen Geräten zur Aufzeichnung von Videosignalen sind zwei Magnetköpfe um 180^{o} versetzt in der Trommel angeordnet und zeichnen jeweils ein Halbbild pro Schrägspur auf. Eine Schrägspur entspricht somit einer halben Umdrehung der Trommel. Um aufeinanderfolgende Schrägspuren unmittelbar nebeneinander auf das Magnetband aufzeichnen zu können, wodurch eine bessere Bandausnutzung erreicht wird, werden die Spalte der beiden Magnetköpfe um einen bestimmten, entgegengesetzten Winkel, den sogenannten Azimut, geneigt angeordnet. Durch die unterschiedliche Azimutstellung der Spalte werden die bei der Wiedergabe einer Schrägspur durch die Nachbarspuren verursachten Übersprecheffekte stark gedämpft.

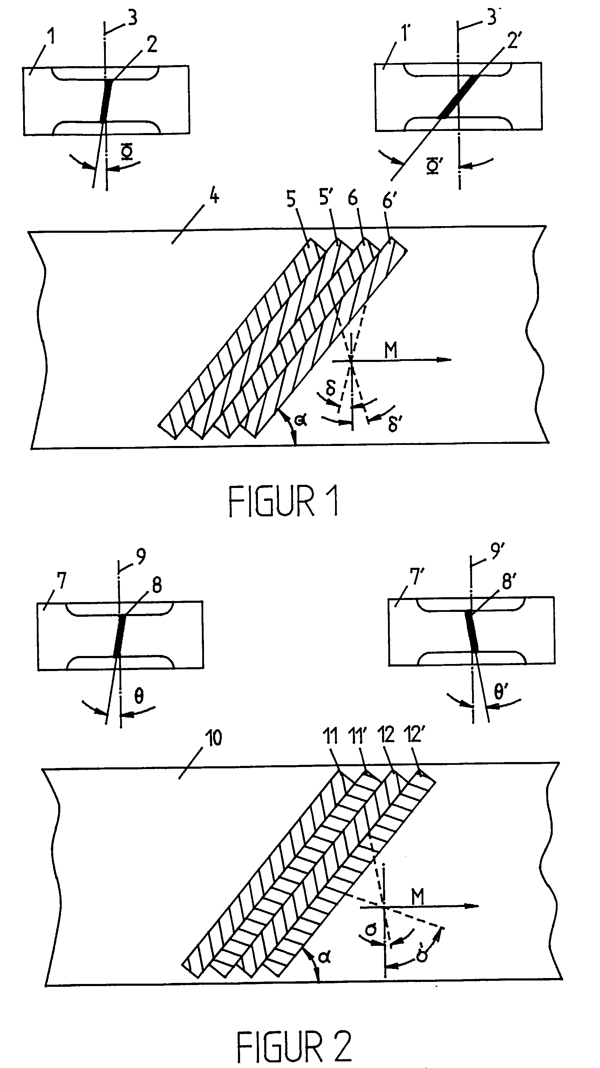

Die Anordnung der Magnetkopfspalte ist in Figur 2 zu sehen. Die Magnetköpfe 7 und 7' weisen Spalte 8 und 8' auf, die um einen betragsmäßig gleichen Winkel θ und θ' zur Richtung der Achsen 9 und 9', die in der Ebene des Magnetkopfspiegels liegen, geneigt sind. Die Winkel θ und θ' sind aber in entgegengesetzten Richtungen orientiert. Bei dem weit verbreiteten VHS-System sind die Spalte beispielsweise um ±6^{o} geneigt. Der Einbau der Magnetköpfe 7 und 7' in die Trommel erfolgt so, daß die Richtung der Achsen 9 und 9' parallel zu der Rotationsachse der Trommel ist. Auf dem Magnetband 10 ergeben sich bei dieser Anordnung der Magnetköpfe 7 und 7' Schrägspuren unter einem Neigungswinkel α.

Beispielsweise sind die Schrägspuren 11, 11', 12 und 12' dargestellt. Der Neigungswinkel α der Schrägspuren ergibt sich aus der schrägen Umschlingung der Trommel durch das Magnetband, dem Durchmesser der Trommel und der Rotationsgeschwindigkeit der Trommel. Die Schrägspuren 11 und 12 sind durch den Magnetkopf 7 aufgezeichnet worden, wobei die Spur 12 zu einem späteren Zeitpunkt, also nach dem Transport des Magnetbandes 10, aufgezeichnet wurde. Die Schrägspuren 11' und 12' stammen dagegen vom Magnetkopf 7'. Deutlich zu erkennen ist außerdem die sich auf dem Magnetband 10 ergebende Lage der Spalte 8 und 8' der Magnetköpfe 7 und 7', die in den Schrägspuren 11, 11', 12 und 12' durch Schraffur dargestellt ist. Für jeweils zwei benachbarte Schrägspuren ist damit ersichtlich, daß die Lage der Spalte 8 und 8' einen Winkel einschließt, welcher die Differenz der Winkel θ und θ' ist. Da die Orientierung der betragsmäßig gleichen Winkel θ und θ' entgegengesetzt ist, wird von den Spalten 8 und 8' der doppelte Betrag des Winkels θ bzw. θ' eingeschlossen. Dadurch wird die gewünschte Dämpfung des Übersprechens von Nachbarspuren erreicht.

Die oben beschriebene Anordnung der Magnetköpfe zur Dämpfung des Übersprechens von Nachbarspuren bei der Schrägspuraufzeichnung ist allgemein als "Slanted-Azimuth" bekannt und z.B. in "Videorecorder-Technik", F. Manz, Vogel-Verlag Würzburg, 1982, S. 42ff, genauer beschrieben.

Aus der Patentanmeldung GB 2 070 841 A geht darüberhinaus hervor, daß es durch die Entkopplung mit unterschiedlichen, nicht notwendigerweise symmetrischen Azimutwinkeln möglich ist, Aufzeichnungen zu überlappen oder übereinander aufzuzeichnen.

Wird eine Magnetkopfanordnung wie oben beschrieben zur Aufzeichnung verwendet und ist die magnetische Schicht des Bandes in Längsrichtung bevorzugt ausgerichtet, so kommt es bei der Magnetisierung der magnetischen Schicht des Magnetbandes zu Magnetisierungsunterschieden für die beiden Azimutwinkel der Magnetköpfe, da hartmagnetisches, längsorientiertes Bandmaterial eine leichte und eine schwere magnetische Achse hat. Der Grund für die unterschiedliche Magnetisierung liegt darin, daß zur Magnetisierung der magnetischen Schicht in Richtung der schweren Achse ein größeres magnetisches Feld nötig ist, als in Richtung der leichten Achse. Die magnetisch leichte Achse ist üblicherweise parallel zur Längsrichtung des Magnetbandes ausgerichtet. Aus diesem Grund, und weil die Längskomponente des aufzuzeichnenden Magnetfeldes der Magnetköpfe senkrecht zu den Spalten steht, ist die günstigste Ausrichtung der Spalte senkrecht zur Längsrichtung des Magnetbandes.

Aus den in Figur 2 dargestellten Schrägspuren 11, 11', 12 und 12', sowie der Lage der Spalte 8 und 8' ist ersichtlich, daß der Spalt 8 des Magnetkopfes 7 nur eine geringe Abweichung δ von der Richtung der magnetisch leichten Achse M hat, zu der er senkrecht stehen muß, da das austretende Feld senkrecht zur Richtung des Spaltes wirkt. Für den Spalt 8' des Magnetkopfes 7' ergibt sich jedoch eine große Abweichung δ' von der Senkrechten zur Richtung der magnetisch leichten Achse M. Diese große Abweichung δ' hat zur Folge, daß für die Magnetisierung der Magnetschicht des Magnetbandes durch Magnetkopf 7' ein stärkeres Magnetfeld nötig ist als bei der Magnetisierung durch Magnetkopf 7 oder umgekehrt, daß der mit Magnetkopf 7' erzielte remanente Magnetismus geringer ist. Für die Aufzeichnung und Wiedergabe ergeben sich dadurch Probleme. Im Aufzeichnungsfall entsteht ein Problem, falls das Magnetfeld so erhöht werden soll, daß für den Fall der Magnetisierung mit großer Abweichung von der leichten magnetischen Achse eine gleich hohe Magnetisierung erzielt werden soll, wie für den Fall der Magnetisierung mit geringer Abweichung, da zur Magnetisierung des hartmagnetischen Bandmaterials große Feldstärken nötig sind, so daß eine Vergrößerung des Magnetfeldes zu Sättigungseffekten im Magnetkopfmaterial führt. Diese Sättigungseffekte beeinflussen den Gradienten des Kopffeldes ungünstig und verursachen Linearitätsprobleme im Aufzeichnungsmagnetfeld und dadurch Verzerrungen. Wird aber das Magnetfeld nicht vergrößert, so treten bei der Wiedergabe Probleme auf, da der Signal-Rausch-Abstand wegen der schwachen, nach der Aufzeichnung verbleibenden Magnetisierung der Magnetschicht des Magnetbandes und des damit verbundenen kleinen Nutzsignals schlecht ist.

Die oben erläuterte Problematik bezüglich unterschiedlicher Magnetisierungen des Aufzeichnungsträgers bei der Aufzeichnung mit unterschiedlichen Azimutwinkeln ist bekannt und wird beispielsweise in der japanischen Patentanmeldung JP 1(64)-42017 A beschrieben.

Aufgabe der Erfindung ist es daher, die zur Dämpfung von Übersprecheffekten von Nachbarspuren verwendete Magnetkopfanordnung mit "Slanted-Azimuth" für die Schrägspuraufzeichnung dahingehend zu verbessern, daß bei der Verwendung von hartmagnetischem Bandmaterial, mit gegebener Vorzugsrichtung für die Magnetisierung, alle Magnetköpfe eine gleich hohe Magnetisierung der Magnetschicht des Magnetbandes bewirken.

Erfindungsgemäß wird die Aufgabe eine Anordnung zur Schrägspuraufzeichnung mit den Merkmalen des Patentanspruchs gelöst.

Der Vorteil der Erfindung liegt darin, daß auf überraschend einfache Weise und mit geringem Aufwand bei der magnetischen Aufzeichnung nach dem Schrägspurverfahren eine gleich hohe Magnetisierung der Magnetschicht von hartmagnetischem Bandmaterial für alle Magnetköpfe, deren Spalte um einen unsymmetrischen Azimut versetzt sind, erreicht wird, ohne Sättigungseffekte in den Magnetköpfen zu verursachen, und ohne die Dämpfung des Übersprechens von Nachbarspuren zu verschlechtern. Dadurch wird bei der Wiedergabe ein höherer Signal-Rausch-Abstand - für zumindest einen Magnetkopferreicht, und alle Magnetköpfe liefern eine gleich hohe Ausgangsspannung.

Die Erfindung wird im folgenden anhand einer in der Zeichnung dargestellten Ausführungsform näher beschrieben.

Es zeigt:
Figur 1 die erfindungsgemäße Magnetkopfanordnung und das sich damit auf dem Magnetband ergebende Spurbild, und
Figur 2 eine Magnetkopfanordnung mit "Slanted-Azimuth" nach dem Stand der Technik und das sich damit ergebende Spurbild.

Die in Figur 1 dargestellten Magnetköpfe 1 und 1' weisen Spalte 2 und 2' mit unterschiedlichen Azimutwinkeln Φ und Φ' bezüglich der Achsen 3 und 3' in der Ebene des Magnetkopfspiegels auf. Die Azimutwinkel Φ und Φ' sind so gewählt, daß sich für die jeweiligen Schrägspuren 5, 5', 6 und 6' mit Neigungswinkel α die Lage der Spalte 2 und 2' so ergibt, daß eine Abweichung von der Senkrechten zur magnetisch leichten Achse M um δ bzw. δ' entsteht. Die Orientierung der Spalte 2 und 2' zur Senkrechten auf die magnetisch leichte Achse M erfolgt, weil das aus den Spalten austretende Magnetfeld senkrecht zu diesen wirkt. Die Azimutwinkel Φ und Φ' werden abhängig vom Spurneigungswinkel α so gewählt, daß sich für δ bzw. δ' kleine, gleich große Werte ergeben, die jedoch groß genug für eine ausreichende Dämpfung des Übersprechens von Nachbarspuren sind. Dadurch läßt sich eine ebenso hohe Dämpfung wie bei der vorbekannten "Slanted-Azimuth"-Magnetkopfanordnung erreichen.

Das beschriebene Verfahren läßt sich auch für Aufzeichnungsgeräte verwenden, die nach dem Mehrkanalverfahren arbeiten. Bei diesen Geräten wird ein Halbbild auf mehrere Spuren verteilt, und für jede der Spuren ist jeweils ein Magnetkopf vorhanden. Diese Magnetköpfe müssen dann lediglich so angeordnet werden, daß immer zwei Köpfe mit unterschiedlichem Azimut aufeinander folgen.

## Patentansprüche

1. Anordnung zur Schrägspuraufzeichnung auf magnetisch längs ausgerichtetes hartmagnetisches Bandmaterial mit mindestens zwei rotierenden Magnetköpfen, deren Magnetkopfspalte zur Dämpfung des Übersprechens von Nachbarspuren einen Azimutversatz aufweisen,
**dadurch gekennzeichnet,**
daß die Magnetkopfspalte (2, 2') mit bezüglich der Rotations achsen (3, 3') in der Ebene der Magnetkopfspiegel unsymmetrischen Azimutwinkeln (Φ, Φ') derart angeordnet sind, daß für jeweils einen bestimmten Neigungswinkel (α) der Schrägspuren (5, 5', 6, 6') zur Bandlaufrichtung die beiden Magnetkopfspalte (2, 2') einen symmetrischen Winkel (δ, δ') zur Senkrechten auf die magnetisch leichte Achse (M) des Bandmaterials (10) einschließen.

## Claims

1. Arrangement for helical-track recording on magnetically longitudinally aligned, hard magnetic tape material, comprising at least two rotating magnetic heads whose magnetic head gaps have, for the purpose of attenuating the crosstalk of adjacent tracks, an azimuthal offset, characterized in that the magnetic head gaps (2, 2') are arranged with azimuthal angles (Φ, Φ') which are asymmetrical with respect to the axes of rotation (3, 3') in the plane of the magnetic head mirror in such a way that for a particular respective angle of inclination (α) of the helical tracks (5, 5', 6, 6') with respect to the tape travel direction, the two magnetic head gaps (2, 2') enclose a symmetrical angle (δ, δ') with respect to the perpendicular to the magnetically easy axis (M) of the tape material (10).

## Revendications

1. Dispositif pour l'enregistrement sur des pistes obliques sur un matériau magnétique dur en forme de bande orienté magnétiquement dans le sens longitudinal, comportant au moins deux têtes magnétiques rotatives, dont les fentes présentent un décalage en azimut afin d'atténuer la diaphonie entre pistes voisines,
caractérisé en ce
que les fentes (2,2') des têtes magnétiques sont disposées avec des angles azimutaux (Φ,Φ') dissymétriques par rapport aux axes de rotation (3,3'), dans le plan des miroirs des têtes magnétiques de telle sorte que, pour respectivement un angle d'inclinaison déterminé (α) des pistes obliques (5,5',6,6') par rapport à la direction de circulation de la bande, les deux fentes (2,2') des têtes magnétiques font un angle symétrique (δ, δ') par rapport à la perpendiculaire à l'axe d'aimantation facile (M) du matériau en forme de bande (10).
